(19) Europäisches Patentamt
European Patent Office
Office européen des brevets

(11) **EP 2 089 260 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **08858386.9**

(22) Anmeldetag: **15.12.2008**

(51) Int Cl.:
**B60T 8/173** *(2006.01)*     **B60R 16/02** *(2006.01)*
**G01D 5/39** *(2006.01)*

(86) Internationale Anmeldenummer:
**PCT/EP2008/067477**

(87) Internationale Veröffentlichungsnummer:
**WO 2009/074690 (18.06.2009 Gazette 2009/25)**

(54) **VORRICHTUNG UND VERFAHREN ZUR ERMITTLUNG DES REIBUNGSZUSTANDES EINER FAHRBAHNOBERFLÄCHE SOWIE DESSEN VERWENDUNG**

APPARATUS AND METHOD FOR DETERMINING THE FRICTIONAL STATE OF A CARRIAGEWAY SURFACE AND USE THEREOF

DISPOSITIF ET PROCÉDÉ DE DÉTERMINATION DE L'ÉTAT DE FROTTEMENT DE LA SURFACE D'UNE CHAUSSÉE ET UTILISATION DE CEUX-CI

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.12.2007   DE 102007060858**

(43) Veröffentlichungstag der Anmeldung:
**19.08.2009   Patentblatt 2009/34**

(73) Patentinhaber: **Technische Universität Ilmenau**
**98693 Ilmenau (DE)**

(72) Erfinder:
• **IVANOV, Valentin**
  **98693 Ilmenau (DE)**
• **AUGSBURG, Klaus**
  **99310 Arnstadt (DE)**
• **SHYROKAU, Barys**
  **Minsk (BY)**

(74) Vertreter: **Engel, Christoph Klaus**
**Engel Patentanwaltskanzlei**
**Marktplatz 6**
**98527 Suhl/Thüringen (DE)**

(56) Entgegenhaltungen:
WO-A-2005/075959     DE-A1-102004 047 914
US-A- 5 229 955     US-A1- 2004 204 812

**Beschreibung**

Die vorliegende Erfindung betrifft eine Vorrichtung und ein Verfahren zur Ermittlung des Reibungszustandes einer Fahrbahnoberfläche.

Die Reibungsbedingungen zwischen einem Fahrbahnbelag und einem Reifen sind die wichtigste Information für verschiedene Fahrzeugsteuersysteme, wie etwa ein Antiblockierbremssystem (ABS), eine automatische Stabilitätssteuerung (ASC), ein elektronisches Stabilitätsprogramm (ESP), eine automatische Distanzregelung, ein elektronischer Beifahrer oder dergleichen.

In den letzten Jahren sind Bordsysteme zur Abschätzung des momentanen Kraftschlussbeiwertes zwischen einem Kraftfahrzeugreifen und einem Straßenbelag vorgeschlagen worden. In diesen Lösungen werden die für die Ermittlung des Kraftschlussbeiwertes zwischen einem Kraftfahrzeugreifen und einer Fahrbahnoberfläche erforderlichen Parameter direkt und/oder indirekt mit Sensoren gemessen und verarbeitet und an ein oder mehrere elektronische Steuergeräte (ECU) weitergegeben, wobei auch Parameter der Kraftfahrzeugdynamik, wie z.B. die Raddrehzahl, die Beschleunigung und der Bremsdruck berücksichtigt werden.

Bei einer direkten sensorischen Erfassung der Parameter für die Bestimmung des Kraftschluss- oder Reibungsbeiwertes zwischen einem Kraftfahrzeugreifen und einem Straßenbelag werden Infrarotstrahlung, Mikrowellenstrahlung, Ultraschalltechnik oder der Doppler-Effekt ausgenutzt. Die dabei verwendeten Sensoren sind jedoch empfindlich gegen Umwelteinflüsse und bedingen einen hohen Einbauaufwand in Serienfahrzeugen.

Die indirekte Erfassung der Parameter zur Bestimmung des Kraftschluss- oder Reibungsbeiwertes zwischen einem Kraftfahrzeugreifen und einem Straßenbelag wird durch hochfrequente Prozesse der Kraftfahrzeugdynamik beeinflusst, wodurch sich die Verarbeitungszeit in den elektronischen Steuergeräten erhöht. Dementsprechend verschlechtert sich auch die Regelgüte der Fahrzeugdynamik, bis hin zum Verlust der Fahrstabilität des Fahrzeugs.

Um die oben erwähnten Probleme zu lösen, sind in den letzten Jahren Systeme vorgeschlagen worden, die eine direkte Messung mehrerer Fahrbahn- und Umgebungsparameter mit vereinfachten Methoden und ihre Verarbeitung in den elektronischen Steuergeräten eines Kraftfahrzeuges zur Identifikation der Reibungsbedingungen einer Fahrbahn ermöglichen.

In der US 2004/0204812 A1 wird z.B. ein Fahrbahnerkennungssystem vorgeschlagen, bei dem eine Kamera, ein Ultraschall- und ein Temperatursensor vorgesehen sind. Die Fahrbahndaten werden gefiltert, damit sie einfacher verarbeitet werden können. Die gefilterten Fahrbahndaten werden mit den Referenzdaten verglichen und es wird ein Sicherheitsgrad dieses Vergleichs erzeugt. Auf der Basis des Vergleichs gefilterter Fahrbahndaten mit den Referenzdaten wird der Fahrbahnzustand bestimmt. Auf der Basis des erkannten Fahrbahnzustandes können der Fahrer informiert und/oder die Stabilitätskontrollsysteme angepasst werden. Nachteilig bei dieser Lösung ist, dass mit ihr nur Werteintervalle für den Kraftschluss oder die Fahrbahnreibung ermittelt werden. Die elektronischen Steuersysteme der Fahrzeuge benötigen jedoch exakte Kraftschlussbeiwerte. Außerdem ist auch hierbei ein hoher erfassungs- und rechentechnischer Aufwand in jedem Kraftfahrzeug notwendig.

Die DE 10 2004 047 914 A1 beschreibt ebenfalls ein Verfahren zur Einschätzung des Fahrbahnzustands.

Bei keiner aus dem Stand der Technik bekannten Lösung wird der Reibungszustand der Fahrbahnoberfläche in Abhängigkeit von den jeweils herrschenden Witterungs- und Umgebungsbedingungen und der aktuellen Beschaffenheit des Fahrbahnbelages exakt ermittelt.

Aufgabe der vorliegenden Erfindung ist es deshalb, die Nachteile des Standes der Technik zu überwinden und eine Vorrichtung sowie ein Verfahren zur exakten Ermittlung des aktuellen maximalen Reibungszustandes der Fahrbahnoberfläche in Abhängigkeit von den momentan vorherrschenden Witterungsbedingungen und dem momentanen Fahrbahnzustand bereitzustellen, die flexibel für eine große Anzahl von Straßenbelagstypen einsetzbar sind.

Erfindungsgemäß wird diese Aufgabe durch eine Vorrichtung gemäß dem ersten Patentanspruch bzw. durch ein Verfahren gemäß dem sechsten Patentanspruch gelöst.

Zur Ermittlung des Reibungszustandes einer Fahrbahnoberfläche werden die Art und der Zustand des Straßenbelages und die jeweiligen Witterungsverhältnisse mit Sensoren, die in einer am Fahrbahnrand stationär aufgebauten Vorrichtung angeordnet sind, erfasst. Die erfassten Daten werden mit Hilfe von Fuzzy-Logiken verarbeitet und ausgewertet und daraus wird der aktuelle maximale Reibungszustand der Fahrbahnoberfläche ermittelt. Letzterer kann dann zusammen mit der Fahrzeuggeschwindigkeit, die mit einer Kamera, die sich ebenfalls in der oben genannten Vorrichtung befindet, an verschiedene Steuergeräte in vorbeifahrenden Fahrzeugen übertragen werden.

Die erfindungsgemäße Vorrichtung umfasst eine erste Sensoreinheit mit einem ersten, zweiten, dritten und vierten Sensor zur Messung der Umgebungstemperatur, der Temperatur des Straßenbelages, der Umgebungsfeuchtigkeit und der Niederschlagsmenge.

Weiterhin umfasst die erfindungsgemäße Vorrichtung eine zweite Sensoreinheit mit einem ersten Sensor zur Erkennung der Fahrbahntextur (z.B. mit Ultraschall), mit einem zweiten Sensor zur Vermessung der Fahrbahnrauhigkeit mit einer Laserstrahlung (z.B. ein Profilometer) und mit einem dritten Sensor zur Vermessung der Albedo (z.B. ein Albedometer).

Vorzugsweise umfasst die erfindungsgemäße Vorrichtung auch eine Kamera, die den Prozess der Kraftfahrzeugbewegung aufnimmt. Schließlich ist eine Übertragungseinheit vorgesehen zur Weitergabe des berechneten, aktuellen maximalen Reibungszustandes der Fahrbahnoberfläche und ggf. der Fahrzeuggeschwindigkeit an ein elektronisches Steuergerät eines vorbeifahrenden Kraftfahrzeuges und/oder an eine Anzeigeeinheit für den Fahrer.

Der Nutzen der vorgeschlagenen technischen Lösung besteht in der schnelleren und exakteren Erfassung des aktuellen maximalen Reibungszustandes der Fahrbahnoberfläche durch eine außerhalb eines Kraftfahrzeuges an einer Fahrbahn positionierten Vorrichtung.

Dabei wird der momentane Reibungszustand der Fahrbahnoberfläche mit hoher Genauigkeit unter Berücksichtigung der Temperatur der Fahrbahnoberfläche, der Rauhigkeit der Fahrbahnoberfläche, der Albedo der Fahrbahnoberfläche, der Umgebungstemperatur, der Umgebungsfeuchtigkeit und der Niederschlagsmenge ermittelt und daraus der aktuelle maximale Reibungsbeiwert der Fahrbahn berechnet und an die Steuersysteme eines vorbeifahrenden Fahrzeugs übermittelt.

Die Erfindung wir im Folgenden anhand von Zeichnungen näher erläutert. Es zeigen:

Fig. 1 - ein Blockschaltbild des prinzipiellen Aufbaus einer erfindungsgemäßen Vorrichtung

Fig. 2 - schematische Darstellungen von Fuzzyfunktionen der Ein- und Ausgangsvariablen für die Ermittlung des witterungsbedingten Reibungszustandes der Fahrbahnoberfläche

Fig. 3 - schematische Darstellungen von Fuzzyfunktionen der Ein- und Ausgangsvariable für die Ermittlung des dem momentanen Zustand der Fahrbahnoberfläche entsprechenden Reibungszustandes der Fahrbahnoberfläche

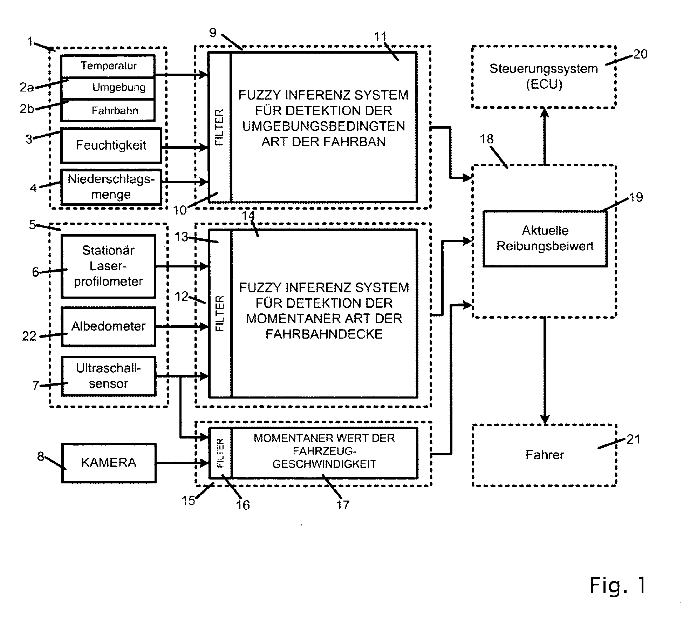

In Fig. 1 ist der prinzipielle Aufbau einer erfindungsgemäßen Vorrichtung zur Ermittlung des aktuellen maximalen Reibungszustandes einer Fahrbahnoberfläche in Form eines Blockschaltbildes dargestellt.

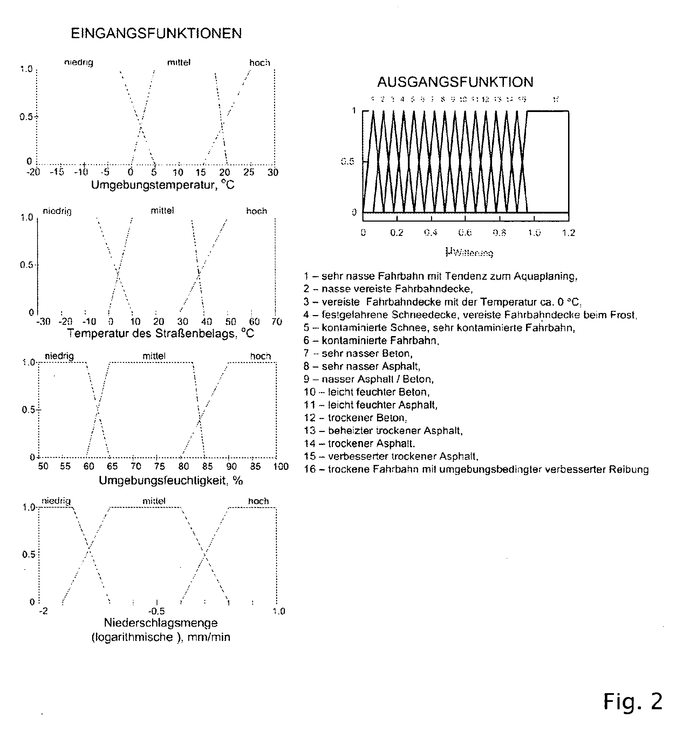

Die Vorrichtung besitzt eine erste Sensoreinheit (1), die ihrerseits einen Sensor für die Messung der Umgebungstemperatur (2a), einen Sensor für die Messung der Temperatur des Straßenbelags (2b), einen Sensor für die Messung der Umgebungsfeuchtigkeit (3) und einen Sensor für die Messung der Niederschlagsmenge (4) umfasst. Die Signale der genannten Sensoren der ersten Sensoreinheit (1) werden an eine erste Signalverarbeitungseinheit (9), die aus einem Filterblock (10) und einem Fuzzy-Inferenz-System (11) besteht, übertragen. Die gefilterten Informationen über die aktuelle Umgebungstemperatur, die Temperatur des Straßenbelags, die Umgebungsfeuchtigkeit und die Niederschlagsmenge werden im Fuzzy-Inferenz-System (11) gemäß den Membership-Eingangsfunktionen, deren Beispiel in Fig. 2 dargestellt ist, fuzzifiziert. Auf Basis der im Fuzzy-Inferenz-System (11) hinterlegten Fuzzy-Regeln wird ein Ausgangssignal gebildet, welches z.B. einer der nachfolgende genannten sechzehn möglichen linguistischen Variablen entspricht:

- sehr nasse Fahrbahn mit Tendenz zum Aquaplaning,
- nasse vereiste Fahrbahndecke,
- vereiste Fahrbahndecke mit der Temperatur ca. 0 °C,
- festgefahrene Schneedecke oder vereiste Fahrbahndecke beim Frost,
- kontaminierte Schnee oder sehr kontaminierte Fahrbahn,
- kontaminierte Fahrbahn,
- sehr nasser Beton,
- sehr nasser Asphalt,
- nasser Asphalt oder Beton,
- leicht feuchter Beton,
- leicht feuchter Asphalt,
- trockener Beton,
- beheizter trockener Asphalt,
- trockener Asphalt,
- verbesserter trockener Asphalt, und/oder
- trockene Fahrbahn mit umgebungsbedinter verbesserter Reibung.

Im nächsten Schritt wird dieses erste Ausgangssignal einer Defuzzifikation entsprechend der Membership-Ausgangsfunktion untergezogen, deren Beispiel ebenfalls in Fig. 2 gezeigt wird. Das Ergebnis ist ein witterungsbedingter Reibungszustand der Fahrbahnoberfläche $\mu_{Witterung}$.

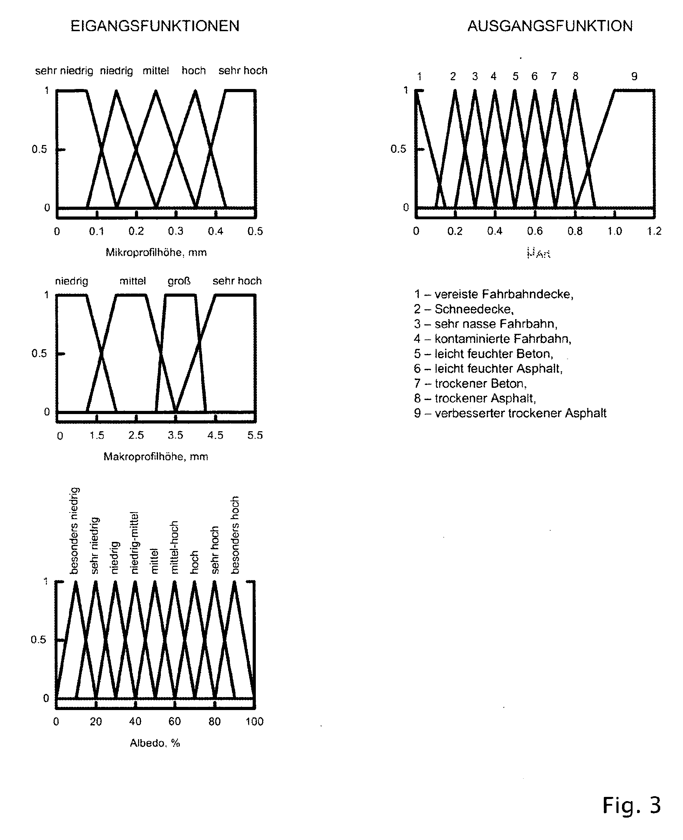

Die Vorrichtung besitzt weiterhin eine zweite Sensoreinheit (5), die einen Sensor (6) für die Abtastung der Fahrbahntextur z.B. mit Ultraschall, einen Sensor (7) für die Messung der Fahrbahnrauhigkeit mit Laserstrahlung (z.B. ein stationäres Profilometer) und einen Sensor (22) für die Messung der Albedo (z.B. ein Albedometer) umfasst. Die Signale der Sensoren der zweiten Sensoreinheit (5) werden an eine zweite Signalverarbeitungseinheit (12), die aus einem Filterblock (13) und einem Fuzzy-Inferenz-System (14) besteht, übertragen. Die gefilterten Informationen über die aktuelle Fahrbahntextur und momentane Fahrbahnrauhigkeit werden als Mikro- und Makroprofilhöhe und Albedowert im Fuzzy-Inferenz-System (14) gemäß den Membership-Eingangsfunktionen, deren Beispiel in Fig. 3 dargestellt ist, fuzzifiziert. Auf Basis der im Fuzzy-Inferenz-System (14) hinterlegten Fuzzy-Regeln wird ein Ausgangssignal gebildet, welches z.B. einer der nachfolgend genannten neun möglichen linguistischen Variablen entspricht:

- vereiste Fahrbahndecke,

- Schneedecke,

- sehr nasse Fahrbahn,

- kontaminierte Fahrbahn,

- leicht feuchter Beton,

- leicht feuchter Asphalt,

- trockener Beton,

- trockener Asphalt, und/oder

- verbesserter trockener Asphalt.

Anschließend wird dieses zweite Ausgangssignal einer Defuzzifikation entsprechend der Membership-Ausgangsfunktion untergezogen, deren Beispiel ebenfalls in Fig. 3 dargestellt ist. Das Ergebnis ist ein dem momentanen Zustand der Fahrbahnoberfläche entsprechender Reibungszustand der Fahrbahnoberfläche $\mu_{Art}$.

In einer bevorzugten Ausführungsform umfasst die erfindungsgemäße Vorrichtung außerdem eine Kamera (8). Die mit der Kamera (8) aufgenommen Informationen und ggf. die Signale vom Ultraschallsensor (7) werden an eine dritte Signalverarbeitungseinheit (15), die einen Filterblock (16) und eine Videobearbeitungseinheit (17) umfasst, weitergeleitet. Die Videobearbeitungseinheit (17) berechnet aus diesen Informationen die momentane Kraftfahrzeuggeschwindigkeit.

Der in der Signalverarbeitungseinheit (9) ermittelte witterungsbedingte Reibungsbeiwert der Fahrbahnoberfläche, der in der Signalverarbeitungseinheit (12) ermittelte und dem momentanen Zustand der Fahrbahnoberfläche entsprechende Reibungsbeiwert der Fahrbahnoberfläche und ggf. die in der Signalverarbeitungseinheit (15) ermittelte momentane Fahrzeugsgeschwindigkeit werden an eine vierte Signalverarbeitungseinheit (18), die eine Einheit (19) für die Berechnung des aktuellen maximalen Reibungsbeiwertes der Fahrbahnoberfläche $\mu_{aktuell}$ umfasst, übertragen. Dabei wird der aktuelle maximale Reibungsbeiwert der Fahrbahnoberfläche $\mu_{aktuell}$ aus den Werten $\mu_{Witterung}$ und $\mu_{Art}$ nach der Gleichung

$$\mu_{aktuell} = k_1 \cdot \mu_{Witterung} + k_2 \cdot \mu_{Art}$$

berechnet, wobei $k_1$ und $k_2$ Wichtungskoeffizienten sind, die aus einer vorher zusammengestellten Datenbank entnommen werden können.

Die Werte des so ermittelten aktuellen maximalen Reibungsbeiwertes $\mu_{aktuell}$ und ggf. der Fahrzeuggeschwindigkeit werden zum Beispiel an ein elektronisches Steuergerät (20) oder an eine Anzeigeeinheit (21) für den Fahrers eines vorbeifahrenden Kraftfahrzeuges drahtlos übertragen und können dort für die Ermittlung des maximalen Kraftschlussbeiwertes zwischen Kraftfahrzeugreifen und Straßenbelag verwendet werden. Ebenso können die ermittelten Werte an andere Steuereinheiten übertragen werden, beispielsweise zur Anzeige von zulässigen Höchstgeschwindigkeiten oder der Aktivierung von Winterdienstmaßnahmen.

Zur Bestimmung des Kraftschlussbeiwertes können auch im Fahrzeug gewonnene bzw. gespeicherte Daten herangezogen werden. Beispielsweise kann die im Fahrzeug ermittelte Fahrzeuggeschwindigkeit anstelle des von der externen Vorrichtung übertragenen Geschwindigkeitswertes verwendet werden.

**EP 2 089 260 B1**

**Bezugzeichenliste**

| | |
|---|---|
| 1, 5 | - erste und zweite Sensoreinheit |
| 2a, 2b, 3, 4, 6, 7 | - Sensoren |
| 8 | - Kamera |
| 9, 12 , 15, 18 | - Signalverarbeitungseinheiten |
| 10, 13, 16 | - Filterblöcke |
| 11, 14, | - Fuzzy-Inferenz-Systeme |
| 17 | - Videobearbeitungseinheit |
| 19 | - Berechnungseinheit |
| 20 | - elektronisches Steuergerät im Fahrzeug |
| 21 | - Anzeigeeinheit für den Fahrer |
| 22 | - Albedometer |

**Patentansprüche**

1. Vorrichtung zur Ermittlung des aktuellen maximalen Reibungszustandes einer Fahrbahnoberfläche, die am Fahrbahnrand stationär aufgebaut ist, umfassend:

   ● eine erste Sensoreinheit (1) mit Sensoren zur Ermittlung der Umgebungstemperatur (2a), der Temperatur des Straßenbelages (2b), der Umgebungsfeuchtigkeit (3) und der Niederschlagsmenge (4);
   ● eine zweite Sensoreinheit (5) mit einem Sensor zur Erkennung der Fahrbahntextur (6), einem Sensor zur Bestimmung der Fahrbahnrauhigkeit (7) und einem Sensor zur Bestimmung der Albedo (22);
   ● zwei Signalverarbeitungseinheiten (15, 18) jeweils bestehend aus Filtern (10, 13) und einem Fuzzy-Inferenz-System (11, 14), welche aus den von den Sensoreinheiten (1, 5) gelieferten Signale gemäß hinterlegter Fuzzy-Regeln jeweils ein Ausgangssignal bilden;
   ● eine Übertragungseinheit zur drahtlosen Übertragung der Ausgangssignale bzw. von aus diesen gebildeten Signalen an externe Datenverarbeitungseinheiten (20, 21).

2. Vorrichtung nach Anspruch 1, **dadurch gekennzeichnet, dass** sie weiterhin eine Kamera (8) zur Aufnahme des Fahrzeugbewegungsprozesses eines vorbeifahrenden Fahrzeugs sowie eine Videobearbeitungseinheit (17) zur Ermittlung der Fahrzeuggeschwindigkeit umfasst, und dass die Übertragungseinheit die ermittelte Fahrzeuggeschwindigkeit an die externen Datenverarbeitungseinheiten (20, 21) überträgt.

3. Vorrichtung nach Anspruch 1 oder 2, **dadurch gekennzeichnet, dass** sie eine vierte Signalverarbeitungseinheit (18) besitzt, welche eine Einheit (19) für die Berechnung des aktuellen maximalen Reibungsbeiwertes der Fahrbahnoberfläche ($\mu_{aktuell}$) umfasst.

4. Vorrichtung nach einem der Ansprüche 1 bis 3, **dadurch gekennzeichnet, dass** der Sensor zur Bestimmung der Fahrbahnrauhigkeit ein Ultraschallsensor (7) ist.

5. Vorrichtung nach einem der Ansprüche 1 bis 4, **dadurch gekennzeichnet, dass** es sich bei den externen Datenverarbeitungseinheiten um Steuergeräte (20) oder Anzeigeeinheiten (21) vorbeifahrender Fahrzeuge handelt.

6. Verfahren zur Ermittlung des aktuellen maximalen Reibungszustandes einer Fahrbahnoberfläche, **gekennzeichnet**

**durch** folgende Schritte:

● Erfassen von ersten Sensorsignale, welche die Umgebungstemperatur, die Temperatur des Straßenbelages, die Umgebungsfeuchtigkeit und die Niederschlagsmenge repräsentieren, mit einer stationar an einer Fahrbahn angeordneten Vorrichtung;
● Filtern der ersten Sensorsignale, Verarbeiten der gefilterten ersten Sensorsignale in einem ersten Fuzzy-Inferenz-System nach vorgegeben Fuzzy-Regeln (Membership-Eingangsfunktion) zu einer von mehreren möglichen linguistischen Variablen, Defuzzifikation der Variablen gemäß einer Membership-Ausgangsfunktion und Bereitstellung des Ergebnisses als witterungsbedingter Reibungszustand der Fahrbahnoberfläche ($\mu_{Witterung}$);
● Erfassen von zweiten Sensorsignalen, welche die Fahrbahntextur, die Fahrbahnrauigkeit und die Albedo) repräsentieren;
● Filtern der zweiten Sensorsignale, Verarbeiten der gefilterten zweiten Sensorsignale in einem zweiten Fuzzy-Inferenz-System nach vorgegeben Fuzzy-Regeln (Membership-Eingangsfunktion) zu einer von mehreren möglichen linguistischen Variablen, Defuzzifikation der Variablen gemäß einer Membership-Ausgangsfunktion und Bereitstellung des Ergebnisses als einen dem momentanen Zustand der Fahrbahnoberfläche entsprechenden Reibungszustand der Fahrbahnoberfläche ($\mu_{Art}$);
● Berechnen des aktuellen maximalen Reibungsbeiwerts der Fahrbahnoberfläche ($\mu_{aktuell}$) als gewichtete Summe aus dem Wert für den witterungsbedingten Reibungszustand der Fahrbahnoberfläche ($\mu_{Witterung}$) und aus dem Wert für den dem momentanen Zustand der Fahrbahnoberfläche entsprechenden Reibungszustand der Fahrbahnoberfläche ($\mu_{Art}$).

7. Verwendung eines durch ein Verfahren nach Anspruch 6 ermittelten aktuellen maximalen Reibungsbeiwerts der Fahrbahnoberfläche ($\mu_{aktuell}$), **dadurch gekennzeichnet, dass** dieser Wert in einer stationär an einer Fahrbahn angeordneten Vorrichtung ermittelt und anschließend an entfernte Steuereinheiten übertragen wird.

8. Verwendung nach Anspruch 7, **dadurch gekennzeichnet, dass** der ermittelte aktuelle maximale Reibungsbeiwert der Fahrbahnoberfläche ($\mu_{aktuell}$) drahtlos an in vorbeifahrenden Fahrzeugen angeordnete Steuereinheiten übertragen wird.

9. Verwendung nach Anspruch 8, **dadurch gekennzeichnet, dass** in der stationär an der Fahrbahn angeordneten Vorrichtung der Momentanwert der Fahrzeuggeschwindigkeit des vorbeifahrenden Fahrzeugs ermittelt und ebenfalls an die Steuereinheiten des Fahrzeugs übertragen wird.

**Claims**

1. A device for determining the current maximum friction state of a carriageway surface, which is built in a stationary manner at the carriageway edge, comprising:

• a first sensor unit (1) with sensors for determining the ambient temperature (2a), the temperature of the road surface (2b), ambient humidity (3) and the amount of precipitation (4);
• a second sensor unit (5) with a sensor for detecting the carriageway texture (6), a sensor for determining the carriageway roughness (7) and a sensor for determining the albedo (22);
• two signal processing units (15, 18) in each case consisting of filters (10, 13) and a fuzzy inference system (11, 14), which form one output signal in each case in accordance with stored fuzzy rules from signals delivered by the sensor units (1, 5);
• a transmission unit for wirelessly transmitting the output signals or signals formed from the same to external data processing units (20, 21).

2. The device according to Claim 1, **characterised in that** it furthermore comprises a camera (8) for recording the vehicle motion process of a passing vehicle and a video processing unit (17) for determining the vehicle speed, and **in that** the transmission unit transmits the determined vehicle speed to the external data processing units (20, 21).

3. The device according to Claim 1 or 2, **characterised in that** it possesses a fourth signal processing unit (18), which comprises a unit (19) for calculating the current maximum friction coefficient of the carriageway surface ($\mu_{current}$).

4. The device according to one of Claims 1 to 3, **characterised in that** the sensor for determining the carriageway roughness is an ultrasonic sensor (7).

5. The device according to one of Claims 1 to 4, **characterised in that** the external data processing units are control devices (20) or display units (21) of passing vehicles.

6. A method for determining the current maximum friction state of a carriageway surface, **characterised by** the following steps:

   • detecting first sensor signals, which represent the ambient temperature, the temperature of the road surface, the ambient humidity and the amount of precipitation, using a device arranged in a stationary manner on a carriageway;
   • filtering the first sensor signals, processing the filtered first sensor signals in a first fuzzy inference system in accordance with predetermined fuzzy rules (membership input function) to give one of a plurality of possible linguistic variables, defuzzification of the variables in accordance with a membership output function and provision of the result as a weather-dependent friction state of the carriageway surface ($\mu_{weather}$);
   • detecting second sensor signals which represent the carriageway texture, the carriageway roughness and the albedo;
   • filtering the second sensor signals, processing the filtered second sensor signals in a second fuzzy inference system in accordance with predetermined fuzzy rules (membership input function) to give one of a plurality of possible linguistic variables, defuzzification of the variables in accordance with a membership output function and provision of the result as a friction state of the carriageway surface corresponding to the instantaneous state of the carriageway surface ($\mu_{type}$);
   • calculating the current maximum friction coefficient of the carriageway surface ($\mu_{current}$) as a weighted sum of the value for the weather-dependent friction state of the carriageway surface ($\mu_{weather}$) and the value for the friction state of the carriageway surface corresponding to the instantaneous state of the carriageway surface ($\mu_{type}$).

7. A use of a current maximum friction coefficient of the carriageway surface ($\mu_{current}$) determined by means of a method according to Claim 6, **characterised in that** this value is determined in a device arranged in a stationary manner on a carriageway and is subsequently transmitted to remote control units.

8. The use according to Claim 7, **characterised in that** the current maximum friction coefficient of the carriageway surface ($\mu_{current}$) determined is wirelessly transmitted to control units arranged in passing vehicles.

9. The use according to Claim 8, **characterised in that** the instantaneous value of the vehicle speed of the passing vehicle is determined in the device arranged in a stationary manner on the carriageway and likewise transmitted to the control units of the vehicle.

**Revendications**

1. Dispositif pour la détermination de l'état de frottement maximal actuel d'une surface de chaussé, lequel est installé de manière fixe au bord de la chaussée, comprenant:

   - une première unité de détection (1) avec des capteurs pour déterminer la température ambiante (2a), la température du revêtement de chaussée (2b), le taux d'humidité ambiant (3) et le volume de précipitation (4) ;
   - une deuxième unité de détection (5) avec un capteur pour reconnaître la texture de la chaussée (6), un capteur pour déterminer la rugosité de la chaussée (7) et un capteur pour déterminer l'aldébo (22) ;
   - deux unités de traitement de signal (15, 18) se composant respectivement de filtres (10, 13) et d'un système de détection des interférences à logique floue (11, 14), lesquelles unités forment respectivement un signal de sortie conformément à des règles de logique floue déposées à partir des signaux délivrés par les unités de détection (1, 5) ;
   - une unité de transmission pour la transmission sans fil des signaux de sortie et/ou de signaux formés à partir de ceux-ci à des unités de traitement de données externes (20, 21).

2. Dispositif selon la revendication 1, **caractérisé en ce qu'**il comprend en outre une caméra (8) pour enregistrer le processus de déplacement de véhicule d'un véhicule qui passe ainsi qu'une unité de traitement vidéo (17) pour déterminer la vitesse du véhicule, et **en ce que** l'unité de transmission assure la transmission de la vitesse du véhicule déterminée aux unités de traitement de données externes (20, 21).

**3.** Dispositif selon la revendication 1 ou 2, **caractérisé en ce qu'**il possède une quatrième unité de traitement de signal (18), laquelle comprend une unité (19) pour le calcul du coefficient de frottement maximal actuel de la surface de chaussée ($\mu_{actuel}$).

**4.** Dispositif selon l'une des revendications 1 à 3, **caractérisé en ce que** le capteur pour déterminer la rugosité de la chaussée est un capteur d'ultrasons (7).

**5.** Dispositif selon l'une des revendications 1 à 4, **caractérisé en ce que** les unités de traitement de données externes sont des appareils de commande (20) ou des unités d'affichage (21) de véhicules qui passent.

**6.** Procédé pour déterminer l'état de frottement maximal actuel d'une surface de chaussée, **caractérisé par** les étapes suivantes:

- détection de premiers signaux de détection, lesquels représentent la température ambiante, la température du revêtement de chaussée, le taux d'humidité ambiant et le volume de précipitation, avec un dispositif installé de manière fixe au bord d'une chaussée ;
- filtrage des premiers signaux de détection, traitement des premiers signaux de détection filtrés dans un premier système de détection des interférences à logique floue selon des règles de logique floue prescrites (fonction d'entrée d'affiliation) pour l'obtention de l'une parmi plusieurs variables linguistiques possibles, défuzzification des variables conformément à une fonction de sortie d'affiliation et mise à disposition du résultat en tant qu'état de frottement de la surface de chaussée dépendant des conditions météorologiques ($\mu_{metéo}$) ;
- détection de deuxièmes signaux de détection, lesquels représentent la texture de la chaussée, la rugosité de la chaussée et l'aldébo ;
- filtrage des deuxièmes signaux de détection, traitement des deuxièmes signaux de détection filtrés dans un deuxième système de détection des interférences à logique floue selon des règles de logique floue prescrites (fonction d'entrée d'affiliation) pour l'obtention de l'une parmi plusieurs variables linguistiques possibles, défuzzification des variables conformément à une fonction de sortie d'affiliation et mise à disposition du résultat en tant qu'un état de frottement de la surface de la chaussée correspondant à l'état momentané de la surface de chaussée ($\mu_{type}$) ;
- calcul du coefficient de frottement maximal actuel de la surface de chaussée ($\mu_{actuel}$) en tant que somme pondérée de la valeur pour l'état de frottement de la surface de chaussée dépendant de la météo ($\mu_{météo}$) et de la valeur de l'état de frottement de la surface de chaussée correspondant à l'état momentané de la surface de chaussée ($\mu_{type}$).

**7.** Utilisation d'un coefficient de frottement maximal actuel de la surface de chaussée ($\mu_{actuel}$) déterminé selon un procédé selon la revendication 6, **caractérisée en ce que** cette valeur est déterminée dans un dispositif disposé de manière fixe au bord d'une chaussée et est ensuite transmise à des unités de commande distantes.

**8.** Utilisation selon la revendication 7, **caractérisée en ce que** le coefficient de frottement maximal actuel déterminé pour la surface de chaussée ($\mu_{actuel}$) est transmis sans fil à des unités de commande disposées dans des véhicules qui passent.

**9.** Utilisation selon la revendication 8, **caractérisée en ce que** l'on détermine, dans le dispositif disposé de manière fixe au bord de la chaussée, la valeur momentanée de la vitesse de véhicule du véhicule qui passe et qu'on la transmet également aux unités de commande du véhicule.

Fig. 1

## EINGANGSFUNKTIONEN

Umgebungstemperatur, °C

Temperatur des Straßenbelags, °C

Umgebungsfeuchtigkeit, %

Niederschlagsmenge
(logarithmische ), mm/min

## AUSGANGSFUNKTION

μWitterung

1 – sehr nasse Fahrbahn mit Tendenz zum Aquaplaning,
2 – nasse vereiste Fahrbahndecke,
3 – vereiste Fahrbahndecke mit der Temperatur ca. 0 °C,
4 – festgefahrene Schneedecke, vereiste Fahrbahndecke beim Frost,
5 – kontaminierte Schnee, sehr kontaminierte Fahrbahn,
6 – kontaminierte Fahrbahn,
7 – sehr nasser Beton,
8 – sehr nasser Asphalt,
9 – nasser Asphalt / Beton,
10 – leicht feuchter Beton,
11 – leicht feuchter Asphalt,
12 – trockener Beton,
13 – beheizter trockener Asphalt,
14 – trockener Asphalt,
15 – verbesserter trockener Asphalt,
16 – trockene Fahrbahn mit umgebungsbedingter verbesserter Reibung

# Fig. 2

EIGANGSFUNKTIONEN

AUSGANGSFUNKTION

1 – vereiste Fahrbahndecke,
2 – Schneedecke,
3 – sehr nasse Fahrbahn,
4 – kontaminierte Fahrbahn,
5 – leicht feuchter Beton,
6 – leicht feuchter Asphalt,
7 – trockener Beton,
8 – trockener Asphalt,
9 – verbesserter trockener Asphalt

Fig. 3

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040204812 A1
- DE 102004047914 A1